(19) Europäisches Patentamt / European Patent Office / Office européen des brevets

(11) **EP 4 438 336 B1**

(12) **EUROPEAN PATENT SPECIFICATION**

(45) Date of publication and mention
of the grant of the patent:
**27.05.2026 Bulletin 2026/22**

(21) Application number: **23165898.0**

(22) Date of filing: **31.03.2023**

(51) International Patent Classification (IPC):
*B60C 11/03* (2006.01)    *B60C 11/11* (2006.01)
*B60C 11/13* (2006.01)

(52) Cooperative Patent Classification (CPC):
**B60C 11/0302; B60C 11/11; B60C 11/1392;**
B60C 2011/0313; B60C 2011/0337;
B60C 2011/0344; B60C 2011/0346;
B60C 2011/0358; B60C 2011/0374

(54) **TIRE WITH AN IMPROVED TREAD PATTERN**

REIFEN MIT VERBESSERTEM LAUFFLÄCHENPROFIL

PNEUMATIQUE AVEC UNE SCULPTURE DE BANDE DE ROULEMENT AMÉLIORÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024 Bulletin 2024/40**

(73) Proprietor: **Bridgestone Europe NV/SA
1930 Zaventem (BE)**

(72) Inventor: **PISCOPO, Guido
00128 Rome (IT)**

(74) Representative: **Bardehle Pagenberg
Partnerschaft mbB
Patentanwälte Rechtsanwälte
Prinzregentenplatz 7
81675 München (DE)**

(56) References cited:
**FR-A1- 3 043 592    FR-A1- 3 108 562**

## Description

### Field of the disclosure

The present invention relates to a vehicle tire. One possible application of the disclosed tire relates to an all-season tire intended to equip a passenger vehicle or commercial van vehicles. The disclosure can also be applied to other tires, for example winter tires or tires for off the road applications.

### Background

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary.

For example, all-season tires are known that comprise grooves that extend from a center of the tire's tread, i.e., from the equatorial plane of the tire, towards a shoulder (sometimes also referred to as "shoulder portion" or "side portion") of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.

Further, all-season tires are known to have sipes, which are small incisions in a block, extending in substantially axial direction. Such sipes are configured to trap snow therein and provide an additional edge to increase performance on snow-covered road surfaces. Because providing multiple sipes, which would further increase snow performance, lowers the stiffness of the blocks and thus impairs dry and wet performance, usually only few sipes per block, preferably only one sipe per block, are provided in all-season tires to achieve an acceptable trade-off between snow and wet/dry performance.

To improve dry breaking performance, chamfers can be applied on the trailing edge of a tire block, which allows the utilization of tire deformation during breaking to increase the effective block surface on the ground. Furthermore, chamfers can also be applied on the leading edge of the block to improve traction on snow covered grounds.

However, providing chamfers on both edges of the block reduces the amount of material used in each block, thus impairing the stability of the block, which leads to a decrease in breaking performance, especially on wet and dry grounds. Furthermore, the application of chamfers on both block edges reduces the rubber surface in contact with the ground, which reduces overall grip on wet and dry grounds.

Therefore, it is an object of the present invention to provide a tire having French patent application FR 3 108 562 A1 relates to a tire with a tread comprising two tread patterns, distributed periodically in the circumferential direction. Each tread pattern is formed by three portions.

French patent application FR 3 043 592 A1 discloses a rubber tire comprising a tread of width W delimited by at least one edge. The tread comprises a plurality of blocks, each block being delimited by at least one sidewall extending mainly in an axial direction towards the edge. improved grip on snow-covered roads without having the above-discussed setbacks on wet and dry road surfaces.

### Summary of the invention

This object is achieved by providing an improved vehicle tire according to the independent claim. Further embodiments are described in the dependent claims.

According to aspects of the invention, a tire for a vehicle comprising a tread is provided. The tread comprises a set of consecutive blocks arranged along a circumference of the tire; and a plurality of first grooves arranged over the circumference of the tire, wherein each of the plurality of first grooves is arranged between two blocks of the set of consecutive blocks. Each of the set of consecutive blocks comprises a leading edge and a trailing edge, a first chamfer arranged on a first portion of the leading edge and a second chamfer arranged on a first portion of the trailing edge, wherein the first chamfer has a first average width in the first portion of the leading edge, and the second chamfer has a second average width in the first portion of the trailing edge; and wherein the second average width is larger than the first average width.

Such a tire has a good tradeoff between improving snow traction without reduction of the wet and dry traction. This is particularly achieved by applying the chamfers on the leading and trailing edge asymmetrically, i.e., with the chamfers having different widths on the leading and trailing edge of the block. This is rooted in the conceptual difference in technical purposes of chamfers in the leading and trailing edge of a block: A chamfer on the trailing edge of the block contributes to breaking performance, particularly on dry grounds, while a chamfer on the leading edge contributes to traction, especially on snow-covered grounds.

Because of this conceptual difference, chamfers of different widths provide optimal tradeoff between breaking performance on dry grounds and traction on snow-covered grounds. By providing this optimal asymmetry between the chamfers, a minimum amount of surface void is generated in the respective tread, such that the total contact surface area remains high.

## Brief description of the Figures

Fig. 1 shows a sketch of a vehicle tire according to the present invention.

Fig. 2 illustrates a half tread profile of a tire according to the present invention.

Fig. 3 illustrates an individual block of the set of consecutive blocks of Fig. 2.

Figs. 4A to 4C illustrate three cross-sections in different parts of the block of Fig. 3.

Fig. 5 illustrates an exemplary embodiment of a V-shaped directional tread pattern according to the present disclosure.

Fig. 6 illustrates an exemplary embodiment of an S-shaped tread pattern according to the present disclosure.

## Detailed Description

To overcome the disadvantages of the prior art as discussed above, it may be desirable to provide chamfers on both leading and trailing edge of the block, with the average widths of the chamfers being different in the leading and trailing edge. This is rooted in the different effect chamfers have on the leading and trailing edge of the block.

Within the context of the present disclosure, "chamfer" means an inclined side wall of a block which extends from the outer block surface radially inward. The wall is inclined such that the width of the block measured in circumferential direction increases towards the bottom of the groove. Each chamfer is defined by a height and a width. The chamfer height may correspond to the distance between the outer block surface and the radially innermost end of the inclined wall, measured in radial direction. The height of a chamfer (= distance between the outer block surface and the radially innermost end of the inclined wall) is usually lower than the total height of the block and may for example be at most 50% or less than the total height of the block. The width of the chamfer may be measured perpendicular to the block and corresponds to the width of the inclined chamfer wall when projected onto the outer tread surface.

Chamfers on the trailing edge contribute to dry breaking performance. As a vehicle breaks, due to the inertia of the vehicle's mass, tread blocks are deformed and bend. This way, some of the rubber surface which is arranged towards the leading edge of the block loses contact with the road surface, thus reducing the contact surface of each block. A reduced contact surface leads to reduced friction force, which thus impairs the breaking performance of the tire.

By providing a chamfer on the trailing edge, the inclined surface of the chamfer is pushed towards the ground during breaking as the block bends, thus increasing the rubber surface that is in contact with ground. This way, surface loss at the leading end of the block can be compensated and the contact surface is increased, which leads to better breaking performance by an increased friction force. Consequently, a chamfer on the trailing edge of the block contributes to dry and wet breaking performance.

In contrast, a chamfer on the leading edge has proven to work efficiently to contribute to traction, especially on snow-covered grounds. Generally, in order to increase traction on snow-covered grounds, the surface area of a block should be reduced, to allow for increased contact pressure between the block surface and the ground. Providing the chamfer on the leading edge has shown to be a good location for reducing the area of the block surface. The increased contact pressure provided due to the chamfer on the leading edge, especially leading to a peak in contact pressure at the leading edge of the block, allows for the block, and especially the leading edge thereof, to dig into the snow more efficiently, thus increasing the traction of the tire on snow-covered grounds.

However, providing a chamfer on the leading edge in addition to the chamfer on the trailing edge further reduces the contact surface of the block with the road surface. Consequently, the tire's performance on wet and dry ground is decreased because the smaller tire surface leads to a reduction in friction force. In other words, by providing a chamfer at the leading edge for improved snow traction, at the same time dry and wet traction is impaired. Thus, it is desirable to find a good tradeoff between improving snow traction without reduction of the wet and dry traction.

This can be achieved by applying two chamfers on the leading and trailing edge asymmetrically, i.e., the chamfers having different widths on the leading and trailing edge of the block. Preferably, the chamfer width on the trailing edge is greater than the chamfer width on the leading edge. This way, wet and dry breaking can particularly be improved, while good snow traction can already be achieved with a comparably smaller chamfer width.

For some embodiments, it may also be desirable to provide particularly good snow traction. In such embodiments, it may be desirable to provide a chamfer a the leading edge of greater width. Thus, in order to keep good traction on dry and wet grounds, it may be desirable to then provide a trailing edge chamfer having a smaller width, to keep a relatively large contact surface between the block and the ground.

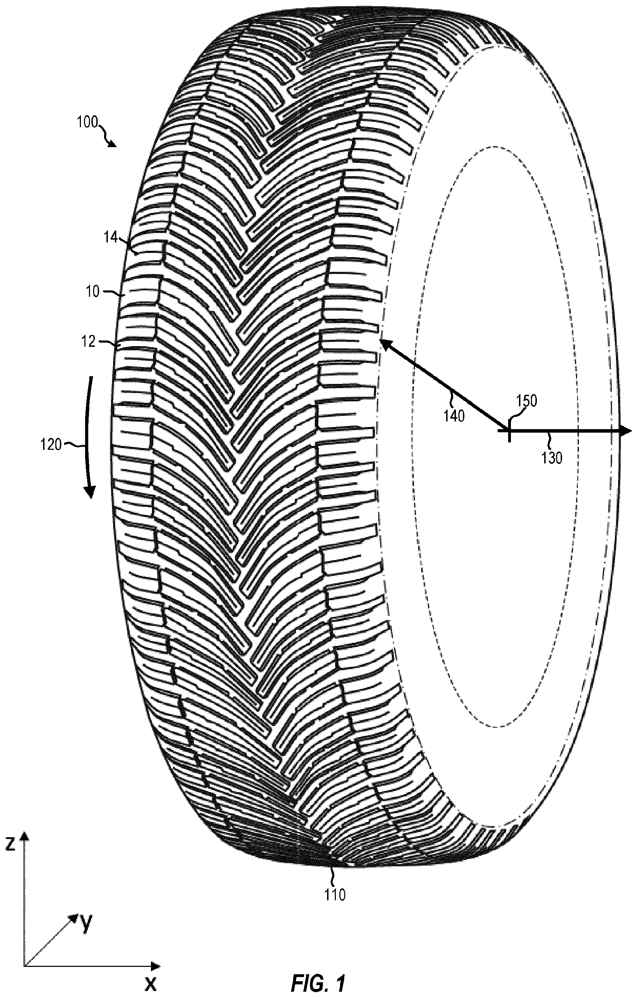

Fig. 1 shows a sketch of a vehicle tire according to the present invention.

According to Fig. 1, the tire 100 comprises a tread 110. The tread comprises a set of consecutive blocks 10 as well as a plurality of grooves 12, each groove 12 arranged between two blocks 10 of the set of consecutive blocks. Moreover, a sipe 14 may be arranged within each of the set of consecutive blocks 10.

The blocks may be arranged consecutively a circumferential direction 120 of the tire.

A "groove" represents an incision in the tread pattern. A width of the groove may vary, for example, the first groove may be of larger width than the second groove or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example, a depth of at least 1 mm, preferably at least 3 mm, is considered.

A "sipe" also represents an incision in the tread pattern. Reference herein to a "sipe" means an incision within a block, rather than a "groove" that separates a block. For example, the width of sipe may also be smaller than the width of a groove, and be for example of less than 2 mm. Just as is the case for the groove, the width of a sipe does not have to be constant and means can be applied to allow for a wider width towards the opening of the tread pattern, and a smaller width in radial inward direction. Also, a depth of a sipe may vary, and sometimes a sipe may extend at full depth, but this does not necessarily have to be the case. For example, a depth of at least 1 mm, preferably at least 20% of the depth of the first grooves, is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

Also, any numeral angles given herein are to be considered absolute values, i.e., not limiting to the orientation of the respective angle.

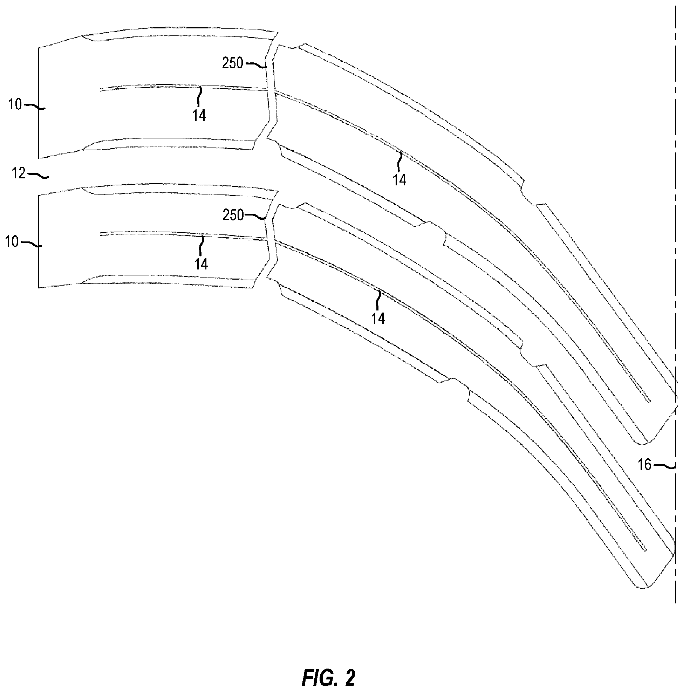

Fig. 2 illustrates a half tread profile of a tire according to the present invention.

According to Fig. 2, the tread comprises a set of consecutive blocks 10 arranged along a circumference of the tire. "Consecutive blocks" within the context of this disclosure means that the tread comprises multiple blocks following one another in succession over the circumference of the tire. While it is preferred that the invention according to the present disclosure is provided for all blocks of the tire, it is possible that some blocks, which may be arranged between individual blocks 10 of the set of consecutive blocks, do not comprise chamfers in accordance with the present invention.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 12 arranged over the circumference of the tire, wherein each of the plurality of first grooves 12 is arranged between two blocks 10 of the set of consecutive blocks. Preferably, the grooves 12 start near the equatorial plane 16 of the tire and extend towards a shoulder end (sometimes also referred to as "shoulder", "shoulder region", "shoulder portion" or "side portion") of the tread to open at the outer edge of the tire. The grooves 12 are generally delimited by the adjacent blocks 10.

The purpose of the grooves 12 is mainly the drainage of water from the contact patch by guiding the water along the groove 12 towards the shoulder of the tire and eject the water from there, as the tire rolls on the ground. Thus, the grooves 12 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

As further illustrated in Fig. 2, the tread may further comprise a plurality of sipes 14. In the shown tread pattern, each of the plurality of sipes 14 may preferably extend substantially along a shape of each of the set of consecutive blocks 10. However, other arrangements and shapes of the sipes on the tread outer surface are also possible, for example wavy shapes, zigzag-shapes, and the like. The sipes do not necessarily have to follow the shape of the block. For example, the sipes may only be included along a part of the shape of the block or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover, such sipes may be also inclined with respect to the radial direction. Some sipes may comprise protrusions near a bottom of the sipe. Sipes 14 are capable of trapping snow therein and providing an additional edge of the tread. This improves traction on snow-covered grounds.

In some embodiments, the plurality of sipes 14 may define an edge ingredient (EI) corresponding to the ratio between a sum of projected lengths of the plurality of sipes in an axial direction (SAP) and the circumference of the tread (C), such that

$$EI = \frac{\sum SAP}{C},$$

wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

The tire according to Fig. 2 may further have a void volume, being the volume of all grooves, sipes and recesses provided in the tread, and a volume of rubber provided in the tread, together making up the total volume of the tread. I.e., if the total volume of the tire is $V_T$, the void volume being $V_V$ and the rubber volume being $V_R$, then the total volume $V_T$ would be $V_T = V_V + V_R$. In a preferred embodiment, the ratio $V_V/V_R$ between the void volume $V_V$ and the rubber volume $V_R$ may be at least 0.20 and at most 0.40. Preferably, the ratio $V_V/V_R$ may be at least 0.24 and at most 0.37, more preferably at least 0.28 and at most 0.35. The ratio $V_V/V_R$ is directly linked to the stiffness of the tread profile. Thus, a higher ratio $V_V/V_R$ indicates a higher amount of void in the tread, which leads to lower stiffness of the tread, and thus benefits snow performance. A lower ratio $V_V/V_R$ indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

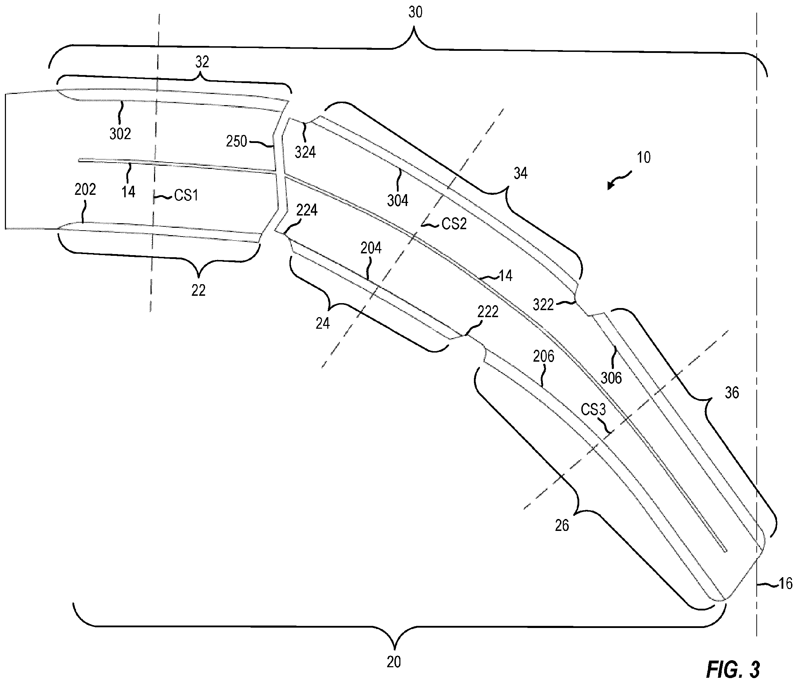

Fig. 3 illustrates an individual block of the set of consecutive blocks of Fig. 2.

According to Fig. 3, block 10 comprises a leading edge 20 and a trailing edge 30.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

According to Fig. 3, the block 10 comprises a first chamfer 202 arranged at a first portion 22 of the leading edge 20 and a second chamfer 302 arranged at a first portion 32 of the trailing edge 30. The first chamfer 202 has a first average width in the first portion 22 of the leading edge 20 and the second chamfer 302 has a second average width in the first portion 32 of the trailing edge 30, with the first average width being different from the second average width.

The width of a chamfer refers to the width measured perpendicularly to the respective block edge. The average width of a chamfer in a portion is measured by measuring the width of the respective chamfer in multiple points within the portion of the respective edge and dividing by the number of points. Mathematically, the average width $\overline{w}$ of a chamfer in a portion may be calculated by integrating the chamfer width over the total length of the respective portion and dividing the integral by the length of the respective portion:

$$\overline{w} = \frac{1}{L} * \int_0^L w(x)dx,$$

with L being the total length of the respective edge portion, $dx$ being the length of an infinitesimal length element of the respective edge portion and $w(x)$ being the chamfer width at the position $x$ of the respective edge portion. This definition of average chamfer widths applies also to the chamfer widths of the possible additional chamfers discussed below.

In the present invention, the second average width is larger than the first average width, i.e., the chamfer on the trailing side is wider than the chamfer on the leading side.

Because the chamfer on the trailing edge directly contributes to the breaking performance of the tire, particularly on dry and wet roads, as discussed above, dry and wet breaking can particularly be improved by this arrangement. Good snow traction can already be achieved with a comparably small chamfer width at the leading edge, such that by providing a wider chamfer on the trailing edge than on the leading edge, an optimal tradeoff between dry/wet breaking and snow traction is achieved without significantly impairing the block stiffness.

In some embodiments, the first average width differs from the second average width by at least 0.2 mm. Preferably, the first average width may differ from the second average width by at least 0.3 mm, more preferably by at least 0.4 mm.

These differences in width provide good tradeoffs between breaking performance, snow traction and block stiffness, which contribute to improved overall grip of the tire.

In some embodiments, the first portion 22 of the leading edge 20 and the first portion 32 of the trailing edge 30 may be arranged at a shoulder region of the tire.

As the edges in the shoulder region of the tire are generally perpendicular to the circumferential direction of the tire, these tread parts particularly contribute to the tire's breaking and acceleration performance. Consequently, applying the asymmetric chamfers in the shoulder region of the tire provides particularly improved breaking performance.

In some embodiments, the block 10 may further comprise a second portion 24 of the leading edge 20 and a second portion 34 of the trailing edge 30. The first portion 22 of the leading edge 20 may be arranged at a position axial outward from the second portion 24 of the leading edge 20. Analogously, the first portion 32 of the trailing edge 30 may be arranged at a position axial outward from the second portion 34 of the trailing edge 30.

In some embodiments, the block 10 may further comprise at least one of:

- a third chamfer 204 arranged on at least the second portion 24 of the leading edge 20; and
- a fourth chamfer 304 arranged on at least the second portion 34 of the trailing edge 30.

Preferably, the block 10 comprises both the third chamfer 204 and the fourth chamfer 304. Arranging additional chamfers on a second portion 24/34 of the leading/trailing edge further improves the effect of the chamfers on the first portions 22/32, i.e., a good tradeoff between improved breaking performance on wet and dry ground, improved traction on snow and block stiffness, leading to better overall grip of the tire.

In some embodiments, the third chamfer 204 may have a third average width in the second portion 24 of the leading edge 20, and the fourth chamfer 304 may have a fourth average width in the second portion 34 of the trailing edge 30. The third average width may be different from the fourth average width, and preferably, the fourth average width may be larger than the third average width, and more preferably, the fourth average width may differ from the third average width by at least 0.2 mm. Preferably, the fourth average width may differ from the third average width by at least 0.3 mm, more preferably by at least 0.4 mm. Similar to the first chamfer 202 and the second chamfer 302, these features further improve the tradeoff between breaking performance, snow traction and thus improve overall grip. As the second portions 24, 34 are positioned axially more inwardly than the first portions 22, 32, applying the chamfers here additionally improves lateral road holding performance.

In some embodiments, a sum of the first average width and the third average width may be different from a sum of the second average width and the fourth average width. Preferably, the sum of the second average width and the fourth average width may be greater than the sum of the first average width and the third average width. More preferably, the sum of the second average width and the fourth average width may be greater than the sum of the first average width and the third average width by at least 0.2 mm. This provides for a further improvement in the tradeoff between breaking performance, snow traction and thus leads to improved overall grip.

In some embodiments, the block 10 may further comprise a third portion 26 of the leading edge 20 and a third portion 36 of the trailing edge 30. The third portion 26 of the leading edge 20 may be arranged at a position axially inward to the second portion 24 of the leading edge 20. Analogously, the third portion 36 of the trailing edge 30 may be arranged at a position axially inward to the second portion 34 of the trailing edge 30.

Consequently, the leading edge 20 of block 10 may comprise, named in an order from axially most outward to axially most inward, a first portion 22, a second portion 24 and a third portion 26. Analogously, the trailing edge 30 of block 10 may comprise, named in an order from axially most outward to axially most inward, a first portion 32, a second portion 34 and a third portion 36. In the case of three portions per edge, the first portions 22, 32 may be denoted as "shoulder portions", the second portions 24, 34 may be denoted as "intermediate portions" and the third portions 26, 36 may be denoted as "central portions". The central portions may be arranged adjacent to the equatorial plane 16 of the tire.

In some embodiments, the block 10 may further comprise:

- a fifth chamfer 206 arranged on at least the third portion 26 of the leading edge 20; and
- a sixth chamfer 306 arranged on at least the third portion 36 of the trailing edge 30.

The fifth chamfer 206 may have a fifth average width in the third portion 26 of the leading edge 20, and the sixth chamfer 306 may have a sixth average width in the third portion 36 of the trailing edge 30.

In some embodiments, the fifth average width may be different from the sixth average width, preferably, the sixth average width may be greater than the fifth average width, more preferably, the fifth average width may be greater than the sixth average width by at least 0.2 mm. Preferably, the fifth average width may differ from the sixth average width by at least 0.3 mm, more preferably by at least 0.4 mm.

In some embodiments, a sum of the first average width, the third average width and the fifth average width may be different from a sum of the second average width, the fourth average width and the sixth average width. Preferably, the sum of the first average width, the third average width and the fifth average width may differ from the sum of the second average width, the fourth average width and the sixth average width by at least 0.2 mm and at most 3.5 mm.

The difference between the sums of average widths directly characterizes the difference between the widths of the chamfers of the leading edge 20 and the widths of the chamfers on the trailing edge 30. Preferably, the sum of average widths on the trailing edge 30, i.e., the sum of the first average width, the third average width and the fifth average width, may be greater than the sum of average widths on the leading edge 20, i.e., the second average width, the fourth average width and the sixth average width.

As is illustrated in Fig. 3, the axial extension of corresponding edge portions may differ between the edges, i.e., as illustrated in Fig. 3, the second portion 34 of the trailing edge 30 may have a greater axial extension than the corresponding second portion 24 of the leading edge 20. Generally, the third portions 26, 36 of the leading edge 20 and the trailing edge 30 may have an axial extension of at least 25% and at most 40% of a half footprint width of the tire. Thus, the third portions 26, 36 preferably start adjacent to the equatorial plane 16 of the tire and extend axially outward up to a width of 25% to 40% of a half footprint width of the tire.

The second portions 24, 34 of the leading edge 20 and the trailing edge 30 may have an axial extension of at least 25% and at most 55% of a half footprint width of the tire. Thus, the second portions 24, 34 preferably start at an axial outward end of the third portions 26, 36 and extend axially outward up to a width of 65% to 80% of a half footprint width of the tire.

The first portions 22, 32 of the leading edge 20 and the trailing edge 30 may have an axial extension of at least 20% and at most 35% of a half footprint width of the tire. Thus, the first portions 22, 32 preferably start at an axial outward end of the second portions 24, 34 and extend axially outward up to an axial outward end of the tire, i.e., covering the total portion of the half footprint width axially outwards from the second portions 24, 34.

In some embodiments, a separation between two portions of the leading and trailing edge may be defined by either one of:

- a recess in the respective edge between neighboring portions;
- a variation in inclination angle of the respective edge to the circumferential direction of the tire;
- the direction or magnitude of curvature of the respective edge;
- a stepwise increase or decrease in chamfer width;
- a groove extending through the block in substantial circumferential direction; or
- a combination thereof.

For example, as is illustrated in Fig. 3, a recess 222 may separate the second portion 24 of the leading edge 20 from the third portion 26 of the leading edge 20. Further, recess 224 may separate the first portion 22 of the leading edge 20 from the second portion 24 of the leading edge 20. Similarly, recess 322 may separate the second portion 34 of the trailing edge 30 from the third portion 36 of the trailing edge, and recess 324 may separate the first portion 32 of the trailing edge 30 from the second portion 34 of the trailing edge 30.

Alternatively, other means of separation between the edge portions are possible. For example, as illustrated in Fig. 3, groove 250 extending through the block 10 in substantially circumferential direction may separate the first portions 22, 32 from the second portions 24, 34. While such a groove is only shown in Fig. 3 for separating the first portions 22, 32 from the second portions 24, 34, a similar groove may also be arranged between the second portions 24, 34 and the third portions 26, 36.

Furthermore, although in Fig. 3 only recesses 222, 224, 322, 324 as well as groove 250 are shown as means for separating neighboring edge portions, other means can be utilized, such as a stepwise increase or decrease in chamfer width.

Alternatively, a change in direction or magnitude of curvature of the respective edge can be used, i.e., a change between concave and convex curvature, as well as an increase or decrease in curvature of the edge, can separate two neighboring edge portions.

Moreover, an inclination angle of the respective block to the circumferential direction of the tire can be used to determine a separation between edge portions.

According to one approach, the inclination angle of a respective part of the edge is determined by the angle between (i) a tangent applied on the respective edge of the block and (ii) the circumferential direction of the tire. If the respective part of the edge comprises a chamfer, the tangent is applied on the circumferentially outermost end of the block (so as to disregard the width and shape of the chamfer). This approach may be used if the respective portions of the edge are formed continuously or nearly continuously, i.e., without any substantial circumferential incision in-between, and shows on the respective edge a discontinuity, e.g., a significant change, in its inclination with respect to the circumferential direction of the tire. The discontinuity then corresponds to the separation between the neighboring edge portions.

Preferably, an inclination angle (i.e., the inclination angle of the tangent on the respective portion of the edge with respect to the circumferential direction) of the first portions 22, 32 may be at least 65° and at most 90° to the circumferential direction, preferably 75° and at most 90° to the circumferential direction, and more preferably, at least 85° and at most 90° to the circumferential direction. An inclination angle of the second portions 24, 34 may be at least 50° and at most 65° to the circumferential direction. Preferably, the inclination angle of the second portions 24, 34 may be at least 50° and at most 60° to the circumferential direction. An inclination angle of the third portions 26, 36 may be at least 20° and at most 50° to the circumferential direction. Preferably, the inclination angle of the third portions 26, 36 may be at least 30° and at most 50° to the circumferential direction.

According to another approach, which may be used if the respective edge does not show any discontinuity in its inclination with respect to the circumferential direction of the tire, a separation between edge portions is preferably determined according to the axial extension on the footprint width as described above in connection with Fig. 3, a recess in the respective edge, the direction or magnitude of curvature of the respective edge, a stepwise increase or decrease in chamfer width, or a groove extending through the block in substantial circumferential direction.

More preferably, in this approach, the inclination angle can also be used in addition to one or more of the afore-mentioned criteria. For example, the third portions 26, 36 that start adjacent to the equatorial plane the tire and extend axially outward up to a width of 25% to 40% of a half footprint width of the tire shown, for at least one of the possible extensions in this range, an angle of inclination that may be at least 20° and at most 50° to the circumferential direction, preferably, at least 30° and at most 50° to the circumferential direction. Likewise, the second portions 24, 34 that start at an axial outward end of the third portions and extend axially outward up to a width of 65% to 80% of a half footprint width of the tire show an inclination angle of at least 50° and at most 65° to the circumferential direction, preferably, at least 50° and at most 60°. Likewise, the first portions 22, 32 that start at an axial outward end of the second portions and extend axially outward up to an axial outward end of the tire show an inclination angle of at least 65° and at most 90° to the circumferential direction, preferably 75° and at most 90° to the circumferential direction, and more preferably, at least 85° and at most 90° to the circumferential direction.

Also, combinations of possible means for separating edge portions are possible. As one example, Fig. 3 shows for the separation between the first portions 22, 32 and the second portions 24, 34 a combination of recesses 224, 324 and groove 250, and there are further conceivable combinations.

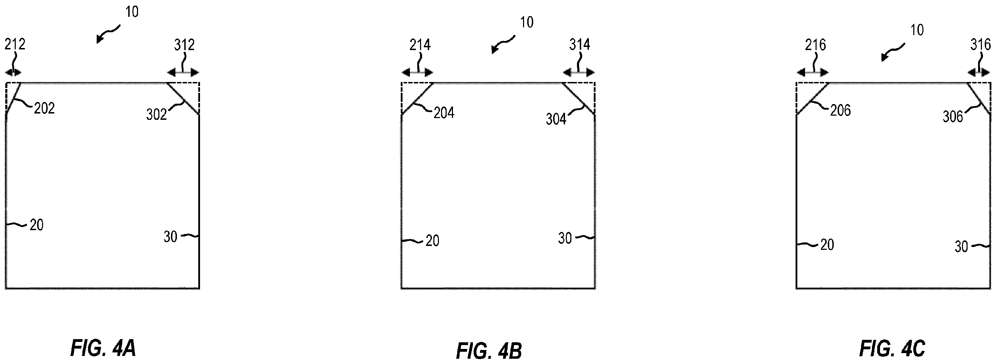

Fig. 3 further shows three cutting lines CS1, CS2 and CS3. Figs. 4A to 4C illustrate three cross-sections in different parts of the block of Fig. 3.

As is shown in Figs. 4A to 4C, the block 10 may comprise chamfers of different widths in different portions.

Fig. 4A illustrates a cross-sectional view of block 10, cut along line CS1. Thus, Fig. 4A illustrates the first chamfer 202, arranged on the leading edge 20 of the block 10, as well as the second chamfer 302, arranged on the trailing edge 30 of the block 10. As discussed above, the chamfer widths are measured perpendicular to a block tangent. As is illustrated in Fig. 4A, the first chamfer width 212 of the first chamfer 202 is smaller than the second chamfer width 312 of the second chamfer 302. Preferably, the first chamfer width 212 of the first chamfer 202 may be smaller than the second chamfer width 312 of the second chamfer 302 by at least 0.2 mm.

Fig. 4B illustrates a cross-sectional view of block 10, cut along line CS2. Thus, Fig. 4B illustrates the third chamfer 204, arranged on the leading edge 20 of the block 10, as well as the fourth chamfer 304, arranged on the trailing edge 30 of the block 10. As is illustrated in Fig. 4B, the third chamfer width 214 of the third chamfer 204 may be substantially equal to the fourth chamfer width 314 of the fourth chamfer 304. Yet, the sum of the first chamfer width 212 and the third chamfer width 214 may still be smaller than the sum of the second chamfer width 312 and fourth chamfer width 314, because the first chamfer width 212 may be smaller than the second chamfer width 312.

Alternatively, the third chamfer width 214 of the third chamfer 204 may be smaller than the fourth chamfer width 314 of the fourth chamfer 304. Preferably, the third chamfer width 214 of the third chamfer 204 may be smaller than the fourth chamfer width 314 of the fourth chamfer 304 by at least 0.2 mm.

Fig. 4C illustrates a cross-sectional view of block 10, cut along line CS3. Thus, Fig. 4C illustrates the fifth chamfer 206, arranged on the leading edge 20 of the block 10, as well as the sixth chamfer 306, arranged on the trailing edge 30 of the block 10. As is illustrated in Fig. 4C, the fifth chamfer width 216 of the fifth chamfer 206 may be greater than the sixth chamfer width 316 of the sixth chamfer 306. Yet, the sum of the first chamfer width 212, the third chamfer width 214 and the fifth chamfer width 216 may still be smaller than the sum of the second chamfer width 312, the fourth chamfer width 314 and the sixth chamfer width 316, because the first chamfer width 212 may be smaller than the second chamfer width 312, with the absolute difference between the first chamfer width 212 and the second chamfer width 312 being greater than the absolute difference between the fifth chamfer width 216 and the sixth chamfer width 316 and the third chamfer width 214 and the fourth chamfer width 314 being equal.

Alternatively, the fifth chamfer width 216 of the fifth chamfer 206 may be equal to or smaller than the sixth chamfer width 316 of the sixth chamfer 306.

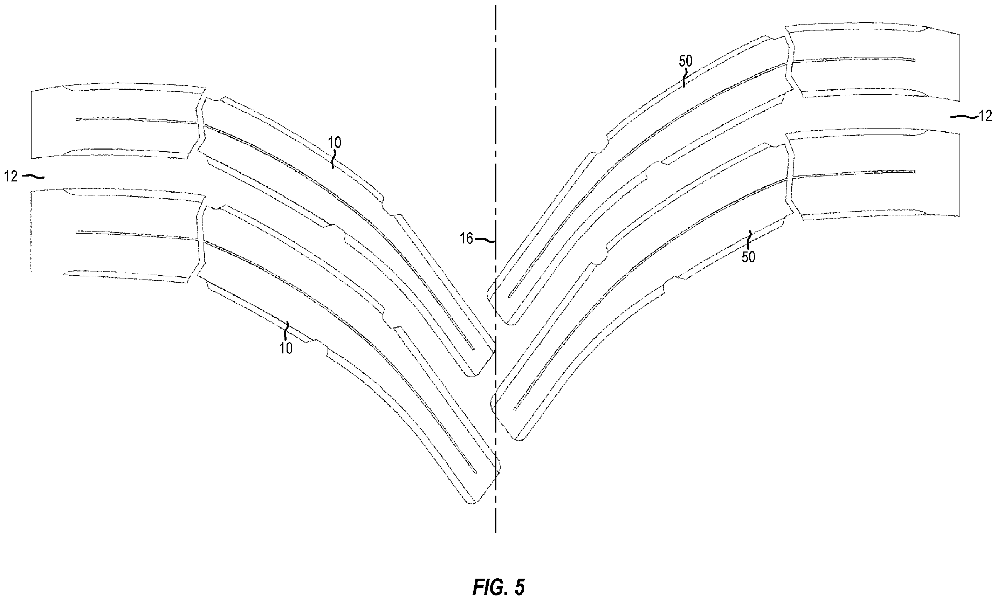

Fig. 5 illustrates an exemplary embodiment of a V-shaped directional tread pattern according to the present disclosure.

According to Fig. 5, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 5, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

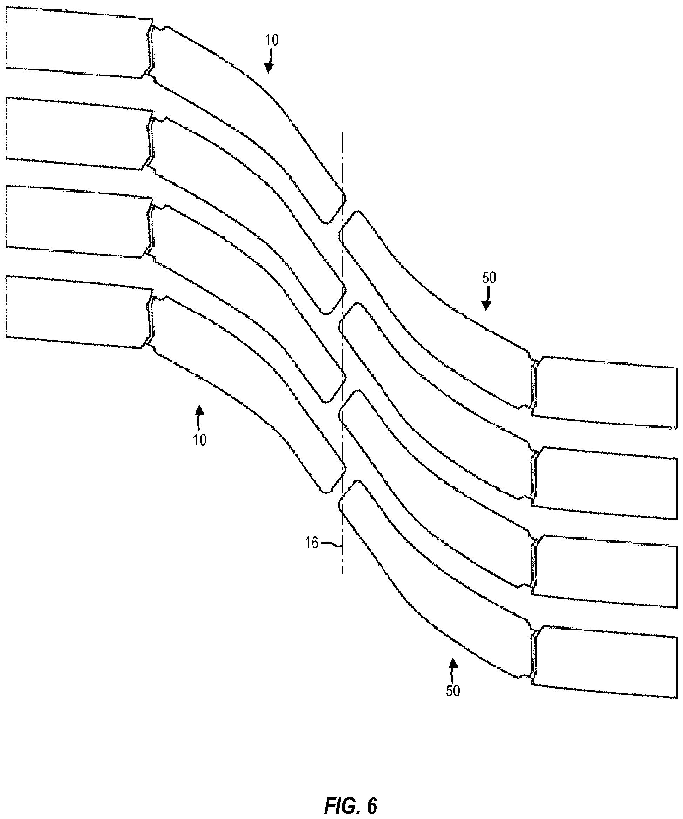

For example, Fig. 6 illustrates an exemplary embodiment of an S-shaped tread pattern according to the present disclosure. For some embodiments, according to Fig. 6, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

**Tire footprint measurement**

Within the context of this disclosure, a "tire footprint" means all parts of the tire that come into contact with the ground when the tire is in inflated and loaded condition. The tire footprint gives information about the behavior of a tread profile in normal condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

**Tire void volume and rubber volume measurement**

The tire void volume in the context of this application is also measured in footprint condition. I.e., the tire is inflated in the same way as described above with respect to the tire footprint measurement. The void volume is measured by a laser measurement system which is capable of detecting, for each pixel, its relative depth with respect to the tread surface. By this, a total void volume in the contact patch can be calculated by integrating over all measured pixels. The total tread volume can be calculated as the product of the footprint width (FW) and the circumference (C) of the tire, multiplied with the weighed mean depths of the first grooves. The total rubber volume is then the difference between the total tread volume and the total void volume.

Measurement values given in the present disclosure refer to measurements conducted in footprint condition and on new tires, which have not been exposed to wear before the measurement.

List of reference numbers:

| | |
|---|---|
| 10 | block |
| 12 | first groove |
| 14 | sipe |
| 16 | equatorial plane |
| 20 | leading edge |
| 22, 32 | first portion |
| 24, 34 | second portion |
| 26, 36 | third portion |
| 30 | trailing edge |

| 202 | first chamfer |
|---|---|
| 204 | third chamfer |
| 206 | fifth chamfer |
| 212 | first width |
| 214 | third width |
| 216 | fifth width |
| 222, 224, 322, 324 | recess |
| 250 | groove |
| 302 | second chamfer |
| 304 | fourth chamfer |
| 306 | sixth chamfer |
| 312 | second width |
| 314 | fourth width |
| 316 | sixth width |

**Claims**

1. A tire (100) for a vehicle comprising a tread (110), the tread comprising:

   a set of consecutive blocks (10) arranged along a circumference of the tire; and
   a plurality of first grooves (12) arranged over the circumference of the tire, wherein

   each of the plurality of first grooves is arranged between two blocks of the set of consecutive blocks;
   each of the set of consecutive blocks (10) comprising:

   a leading edge (20) and a trailing edge (30),
   a first chamfer (202) arranged on a first portion (22) of the leading edge and a second chamfer (302) arranged on a first portion (32) of the trailing edge,
   wherein each of the first chamfer and the second chamfer has a respective height lower than a total height of the block,
   wherein the first chamfer has a first average width in the first portion of the leading edge, and the second chamfer has a second average width in the first portion of the trailing edge, wherein the width of the chamfer is measured perpendicularly to the respective block edge; the tire being **characterised in that** the second average width is larger than the first average width.

2. The tire of claim 1, wherein the first average width differs from the second average width by at least 0.2 mm.

3. The tire of any of the preceding claims, wherein the first portions of the leading and the trailing edge are arranged at a shoulder region of the tire.

4. The tire of any of the preceding claims, wherein each of the set of consecutive blocks further comprises: a second portion (24, 34) of the leading edge and the trailing edge, wherein the first portion (22, 32) of the leading edge and the trailing edge is arranged at a position axial outward to the second portion (24, 34).

5. The tire of claim 4, wherein each of the set of consecutive blocks further comprises at least one of:

   a third chamfer (204) arranged on at least the second portion (24) of the leading edge; and
   a fourth chamfer (304) arranged on at least the second portion (34) of the trailing edge.

6. The tire of claim 5, wherein the third chamfer (204) has a third average width in the second portion of the leading edge, and the fourth chamfer (304) has a fourth average width in the second portion of the trailing edge, wherein the third average width is different from the fourth average width, and preferably, the fourth average width is larger than the third average width, and more preferably, the fourth average width differs from the third average width by at least 0.2 mm.

7. The tire of claim 5 or 6, wherein a sum of the first average width and the third average width is different from a sum of the second average width and the fourth average width.

8. The tire of any of claims 4 to 7, wherein each of the set of consecutive blocks further comprises: a third portion (26, 36) of the leading edge and the trailing edge, wherein the third portion of the leading edge and the trailing edge is arranged at a position axial inward to the second portion (24, 34).

9. The tire of claim 8, wherein each of the set of consecutive blocks further comprises:

   a fifth chamfer (206) arranged on at least the third portion (26) of the leading edge and a sixth chamfer (306) arranged on at least the third portion (36) of the trailing edge,
   wherein the fifth chamfer has a fifth average width in the third portion of the leading edge, and the sixth chamfer has a sixth average width in the third portion of the trailing edge.

10. The tire of claim 9, wherein a sum of the first average width, the third average width and the fifth average width is different from a sum of the second average width, the fourth average width and the sixth average width.

**11.** The tire of claim 10, wherein the sum of the first average width, the third average width and the fifth average width differs from the sum of the second average width, the fourth average width and the sixth average width by at least 0.2 mm and at most 3.5 mm.

**12.** The tire of any one of claims 8 to 11, wherein

the third portion of the leading edge or the trailing edge has an axial extension of at least 25% and at most 40% of a half footprint width of the tire, the second portion of the leading or trailing edge has an axial extension of at least 25% and at most 55% of a half footprint width of the tire, and the first portion of the leading or trailing edge has an axial extension of at least 20% and at most 35% of a half footprint width of the tire.

**13.** The tire of any of claims 4 to 12, wherein a separation between two portions of the leading and trailing edge is defined by either one of:

a recess in the respective edge between neighboring portions; a variation in inclination angle of the respective edge to the circumferential direction of the tire; a direction or magnitude of curvature of the respective edge; a stepwise increase or decrease in chamfer width; a groove extending through the block in substantial circumferential direction; or a combination thereof.

**14.** The tire of any one of the preceding claims, the tread further comprising:

a plurality of sipes defining an edge ingredient, EI, corresponding to the ratio between a sum of projected lengths of the plurality of sipes in an axial direction, SAP, and the circumference of the tread, C, such that

$$EI = \frac{\sum SAP}{C},$$

wherein the EI is at least 2 and at most 20.

## Patentansprüche

**1.** Reifen (100) für ein Fahrzeug, umfassend eine Lauffläche (110), die Lauffläche umfassend:

einen Satz aufeinanderfolgender Blöcke (10), die entlang eines Umfangs des Reifens angeordnet sind; und eine Vielzahl von ersten Rillen (12), die über den Umfang des Reifens angeordnet sind, wobei jede der Vielzahl von ersten Rillen zwischen zwei Blöcken des Satzes aufeinanderfolgender Blöcke angeordnet ist; jeder des Satzes aufeinanderfolgender Blöcke (10) umfassend:

eine Vorderkante (20) und eine Hinterkante (30), eine erste Fase (202), die an einem ersten Abschnitt (22) der Vorderkante angeordnet ist, und eine zweite Fase (302), die an einem ersten Abschnitt (32) der Hinterkante angeordnet ist. wobei jede der ersten Fase und der zweiten Fase eine jeweilige Höhe aufweist, die geringer als eine Gesamthöhe des Blocks ist, wobei die erste Fase eine erste durchschnittliche Breite in dem ersten Abschnitt der Vorderkante aufweist, und die zweite Fase eine zweite durchschnittliche Breite in dem ersten Abschnitt der Hinterkante aufweist, wobei die Breite der Fase senkrecht zu der jeweiligen Blockkante gemessen wird; wobei der Reifen **dadurch gekennzeichnet ist, dass** die zweite durchschnittliche Breite größer als die erste durchschnittliche Breite ist.

**2.** Reifen nach Anspruch 1, wobei sich die erste durchschnittliche Breite von der zweiten durchschnittlichen Breite um mindestens 0,2 mm unterscheidet.

**3.** Reifen nach einem der vorstehenden Ansprüche, wobei die ersten Abschnitte der Vorder- und der Hinterkante an einem Schulterbereich des Reifens angeordnet sind.

**4.** Reifen nach einem der vorstehenden Ansprüche, wobei jeder des Satzes aufeinanderfolgender Blöcke ferner umfasst: einen zweiten Abschnitt (24, 34) der Vorderkante und der Hinterkante, wobei der erste Abschnitt (22, 32) der Vorderkante und der Hinterkante an einer Position axial außerhalb des zweiten Abschnitts (24, 34) angeordnet ist.

**5.** Reifen nach Anspruch 4, wobei jeder des Satzes aufeinanderfolgender Blöcke ferner mindestens eine umfasst von:

einer dritten Fase (204), die an mindestens dem zweiten Abschnitt (24) der Vorderkante angeordnet ist; und einer vierten Fase (304), die an mindestens dem zweiten Abschnitt (34) der Hinterkante angeordnet ist.

6. Reifen nach Anspruch 5, wobei die dritte Fase (204) eine dritte durchschnittliche Breite in dem zweiten Abschnitt der Vorderkante aufweist, und die vierte Fase (304) eine vierte durchschnittliche Breite in dem zweiten Abschnitt der Hinterkante aufweist, wobei die dritte durchschnittliche Breite zu der vierten durchschnittlichen Breite unterschiedlich ist, und vorzugsweise, die vierte durchschnittliche Breite größer als die dritte durchschnittliche Breite ist, und mehr bevorzugt, sich die vierte durchschnittliche Breite von der dritten durchschnittlichen Breite um mindestens 0,2 mm unterscheidet.

7. Reifen nach Anspruch 5 oder 6, wobei eine Summe der ersten durchschnittlichen Breite und der dritten durchschnittlichen Breite zu einer Summe der zweiten durchschnittlichen Breite und der vierten durchschnittlichen Breite unterschiedlich ist.

8. Reifen nach einem der Ansprüche 4 bis 7, wobei jeder des Satzes aufeinanderfolgender Blöcke ferner umfasst:
einen dritten Abschnitt (26, 36) der Vorderkante und der Hinterkante, wobei der dritte Abschnitt der Vorderkante und der Hinterkante an einer Position axial innerhalb des zweiten Abschnitts (24, 34) angeordnet ist.

9. Reifen nach Anspruch 8, wobei jeder des Satzes aufeinanderfolgender Blöcke ferner umfasst:

eine fünfte Fase (206), die an mindestens dem dritten Abschnitt (26) der Vorderkante angeordnet ist, und eine sechste Fase (306), die an mindestens dem dritten Abschnitt (36) der Hinterkante angeordnet ist,
wobei die fünfte Fase eine fünfte durchschnittliche Breite in dem dritten Abschnitt der Vorderkante aufweist, und die sechste Fase eine sechste durchschnittliche Breite in dem dritten Abschnitt der Hinterkante aufweist.

10. Reifen nach Anspruch 9, wobei eine Summe der ersten durchschnittlichen Breite, der dritten durchschnittlichen Breite und der fünften durchschnittlichen Breite zu einer Summe der zweiten durchschnittlichen Breite, der vierten durchschnittlichen Breite und der sechsten durchschnittlichen Breite unterschiedlich ist.

11. Reifen nach Anspruch 10, wobei sich die Summe der ersten durchschnittlichen Breite, der dritten durchschnittlichen Breite und der fünften durchschnittlichen Breite von der Summe der zweiten durchschnittlichen Breite, der vierten durchschnittlichen Breite und der sechsten durchschnittlichen Breite um mindestens 0,2 mm und höchstens 3,5 mm unterscheidet.

12. Reifen nach einem der Ansprüche 8 bis 11, wobei

der dritte Abschnitt der Vorderkante oder der Hinterkante eine axiale Erstreckung von mindestens 25 % und höchstens 40 % einer halben Aufstandsflächenbreite des Reifens aufweist, der zweite Abschnitt der Vorder- oder der Hinterkante eine axiale Erstreckung von mindestens 25 % und höchstens 55 % einer halben Aufstandsflächenbreite des Reifens aufweist, und der erste Abschnitt der Vorder- oder der Hinterkante eine axiale Erstreckung von mindestens 20 % und höchstens 35 % einer halben Aufstandsflächenbreite des Reifens aufweist.

13. Reifen nach einem der Ansprüche 4 bis 12, wobei eine Trennung zwischen zwei Abschnitten der Vorder- und der Hinterkante durch eines definiert ist von:

einer Aussparung in der jeweiligen Kante zwischen benachbarten Abschnitten;
einer Variation eines Neigungswinkels der jeweiligen Kante zu der Umfangsrichtung des Reifens;
einer Richtung oder Größe einer Krümmung der jeweiligen Kante;
einer stufenweise erfolgenden Zunahme oder Abnahme der Fasenbreite;
einer Rille, die sich durch den Block in im Wesentlichen Umfangsrichtung erstreckt; oder
einer Kombination davon.

14. Reifen nach einem der vorstehenden Ansprüche, die Lauffläche ferner umfassend:

eine Vielzahl von Lamellen, die einen Kantenbestandteil, EI, definieren, der dem Verhältnis zwischen einer Summe von projizierten Längen der Vielzahl von Lamellen in einer axialen Richtung, SAP, und dem Umfang der Lauffläche, C, derart entspricht, dass

$$EI = \frac{\sum SAP}{C},$$

wobei der EI mindestens 2 und höchstens 20 beträgt.

## Revendications

1. Pneu (100) pour un véhicule comprenant une bande de roulement (110), la bande de roulement comprenant :

un ensemble de blocs consécutifs (10) agencés le long d'une circonférence du pneu ; et

une pluralité de premières rainures (12) agencées sur la circonférence du pneu, dans lequel chacune de la pluralité de premières rainures est agencée entre deux blocs de l'ensemble de blocs consécutifs ;

chacun de l'ensemble de blocs consécutifs (10) comprenant :

un bord d'attaque (20) et un bord de fuite (30) ;

un premier chanfrein (202) agencé sur une première partie (22) du bord d'attaque et un deuxième chanfrein (302) agencé sur une première partie (32) du bord de fuite,

dans lequel chacun du premier chanfrein et du deuxième chanfrein a une hauteur respective inférieure à une hauteur totale du bloc,

dans lequel le premier chanfrein a une première largeur moyenne dans la première partie du bord d'attaque, et le deuxième chanfrein a une deuxième largeur moyenne dans la première partie du bord de fuite, dans lequel la largeur du chanfrein est mesurée perpendiculairement au bord de bloc respectif ;

le pneu étant **caractérisé en ce que** la deuxième largeur moyenne est supérieure à la première largeur moyenne.

2. Pneu selon la revendication 1, dans lequel la première largeur moyenne diffère de la deuxième largeur moyenne d'au moins 0,2 mm.

3. Pneu selon l'une quelconque des revendications précédentes, dans lequel les premières parties du bord d'attaque et de fuite sont agencées au niveau d'une région d'épaulement du pneu.

4. Pneu selon l'une quelconque des revendications précédentes, dans lequel chacun de l'ensemble de blocs consécutifs comprend en outre :
une deuxième partie (24, 34) du bord d'attaque et du bord de fuite, dans lequel la première partie (22, 32) du bord d'attaque et du bord de fuite est agencée au niveau d'une position axiale vers l'extérieur par rapport à la deuxième partie (24, 34).

5. Pneu selon la revendication 4, dans lequel chacun de l'ensemble de blocs consécutifs comprend en outre au moins l'un de :

un troisième chanfrein (204) agencé sur au moins la deuxième partie (24) du bord d'attaque ;

et
un quatrième chanfrein (304) agencé sur au moins la deuxième partie (34) du bord de fuite.

6. Pneu selon la revendication 5, dans lequel le troisième chanfrein (204) a une troisième largeur moyenne dans la deuxième partie du bord d'attaque, et le quatrième chanfrein (304) a une quatrième largeur moyenne dans la deuxième partie du bord de fuite, dans lequel la troisième largeur moyenne est différente de la quatrième largeur moyenne, et de préférence, la quatrième largeur moyenne est plus grande que la troisième largeur moyenne, et plus préférablement, la quatrième largeur moyenne diffère de la troisième largeur moyenne d'au moins 0,2 mm.

7. Pneu selon la revendication 5 ou 6, dans lequel une somme de la première largeur moyenne et de la troisième largeur moyenne est différente d'une somme de la deuxième largeur moyenne et de la quatrième largeur moyenne.

8. Pneu selon l'une quelconque des revendications 4 à 7, dans lequel chacun de l'ensemble de blocs consécutifs comprend en outre :
une troisième partie (26, 36) du bord d'attaque et du bord de fuite, dans lequel la troisième partie du bord d'attaque et du bord de fuite est agencée au niveau d'une position axiale vers l'intérieur par rapport à la deuxième partie (24, 34).

9. Pneu selon la revendication 8, dans lequel chacun de l'ensemble de blocs consécutifs comprend en outre :

un cinquième chanfrein (206) agencé sur au moins la troisième partie (26) du bord d'attaque et un sixième chanfrein (306) agencé sur au moins la troisième partie (36) du bord de fuite, dans lequel le cinquième chanfrein a une cinquième largeur moyenne dans la troisième partie du bord d'attaque, et le sixième chanfrein a une sixième largeur moyenne dans la troisième partie du bord de fuite.

10. Pneu selon la revendication 9, dans lequel une somme de la première largeur moyenne, de la troisième largeur moyenne et de la cinquième largeur moyenne est différente d'une somme de la deuxième largeur moyenne, de la quatrième largeur moyenne et de la sixième largeur moyenne.

11. Pneu selon la revendication 10, dans lequel la somme de la première largeur moyenne, de la troisième largeur moyenne et de la cinquième largeur moyenne diffère de la somme de la deuxième largeur moyenne, de la quatrième largeur moyenne et de la sixième largeur moyenne d'au moins 0,2 mm et d'au plus 3,5 mm.

**12.** Pneu selon l'une quelconque des revendications 8 à 11, dans lequel

la troisième partie du bord d'attaque ou du bord de fuite a une extension axiale d'au moins 25 % et d'au plus 40 % d'une demi-largeur d'empreinte du pneu,
la deuxième partie du bord d'attaque ou de fuite a une extension axiale d'au moins 25 % et d'au plus 55 % d'une demi-largeur d'empreinte du pneu, et
la première partie du bord d'attaque ou de fuite a une extension axiale d'au moins 20 % et d'au plus 35 % d'une demi-largeur d'empreinte du pneu.

**13.** Pneu selon l'une quelconque des revendications 4 à 12, dans lequel une séparation entre deux parties du bord d'attaque et de fuite est définie par l'un ou l'autre parmi :

un évidement dans le bord respectif entre des parties voisines ;
une variation d'angle d'inclinaison du bord respectif par rapport à la direction circonférentielle du pneu ;
une direction ou une amplitude de courbure du bord respectif ;
une augmentation ou une diminution par étapes de la largeur de chanfrein ;
une rainure s'étendant à travers le bloc dans une direction circonférentielle substantielle ; ou
une combinaison de ceux-ci.

**14.** Pneu selon l'une quelconque des revendications précédentes, la bande de roulement comprenant en outre :

une pluralité de lamelles définissant un ingrédient de bord, EI, correspondant au rapport entre une somme de longueurs projetées de la pluralité de lamelles dans une direction axiale, SAP, et la circonférence de la bande de roulement, C, de telle sorte que

$$EI = \frac{\sum SAP}{C},$$

dans lequel l'EI est d'au moins 2 et d'au plus 20.

FIG. 1

*FIG. 2*

FIG. 3

*FIG. 4A*

*FIG. 4B*

*FIG. 4C*

FIG. 5

EP 4 438 336 B1

**FIG. 6**

**EP 4 438 336 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 3108562 A1
- FR 3043592 A1